# EUROPÄISCHE PATENTSCHRIFT

(11) **EP 2 038 588 B1**
(45) Veröffentlichungstag und Bekanntmachung des Hinweises auf die Patenterteilung: **26.04.2017**
(21) Anmeldenummer: 07785569.0
(22) Anmeldetag: 27.06.2007
(51) Int. Cl.: F24J 2/04, F24J 2/46

(54) **TEILTRANSPARENTER SONNENKOLLEKTOR MIT SONNENSCHUTZFUNKTION**
PARTIALLY TRANSPARENT SUN COLLECTOR HAVING A SUN PROTECTION FUNCTION
PANNEAU SOLAIRE PARTIELLEMENT TRANSPARENT À FONCTION PARE-SOLEIL

(30) Priorität: 30.06.2006 DE 102006030245
(43) Veröffentlichungstag der Anmeldung: 25.03.2009
(73) Patentinhaber: Fraunhofer-Gesellschaft zur Förderung der angewandten Forschung e.V., 80686 München (DE)
(72) Erfinder: HERMANN, Michael, 79194 Heuweiler (DE); KUHN, Tilmann, 79856 Hinterzarten (DE)
(74) Vertreter: Gagel, Roland
(86) Internationale Anmeldenummer: PCT/DE2007/001136
(87) Internationale Veröffentlichungsnummer: WO 2008/000236

(56) Entgegenhaltungen:
- EP-A- 0 330 701
- EP-A- 1 376 026
- WO-A-99/10934
- AU-B2- 611 084
- DE-A1- 2 949 549
- DE-A1- 3 010 016
- FR-A- 2 068 890
- FR-A- 2 535 032
- FR-A- 2 679 019
- GB-A- 2 000 273
- US-A- 4 014 313
- US-A- 4 248 210
- US-A- 4 429 545

## Beschreibung

### Technisches Anwendungsgebiet

Die vorliegende Erfindung betrifft einen Sonnenkollektor mit einem flachen Absorberkörper, an oder in dem ein oder mehrere Absorberkanäle für den Durchfluss eines Wärmeträgermediums ausgebildet sind.

Sonnenkollektoren werden zur Brauchwassererwärmung oder zur Heizungsunterstützung vielfältig eingesetzt. Flachkollektoren stellen hierbei eine übliche Bauart dar, bei der ein flacher, in der Regel metallischer Absorber die Solarstrahlung aufnimmt und die entstehende Wärme an ein Wärmeträgermedium überträgt, das durch eine an dem Absorber angebrachte oder in ihn integrierte Kanalstruktur fließt. Bekannte Solar-absorber weisen in der Regel spektralselektive Beschichtungen auf, die die Solarstrahlung gut absorbieren, jedoch wenig Infrarotstrahlung emittieren, um die Wärmeverluste gering zu halten. Optisch erscheinen sie schwarz bis bläulich. Neben der üblichen Installation auf dem Dach sind auch Fassadenkollektoren bekannt, die in die Außenwände von Gebäuden integriert werden. Bei Fassadenkollektoren spielen Aspekte der Ästhetik und der Gebäudeintegration eine wesentliche Rolle, zumal sie deutlicher sichtbar sind als Installationen auf dem Dach. Sie können durch gemeinsame Nutzung von Bauteilen und als Gestaltungselement der Fassade zu einer Kostenreduktion führen. Außerdem bieten sie bei geringer Einstrahlung die Möglichkeit, als passiv solares Element, d.h. ohne Durchströmung, genutzt zu werden.

Im Fassadenbau - insbesondere bei Bürobauten - ist der Anteil der verglasten Flächen in den letzten Jahren kontinuierlich gestiegen. Dies kann neben dem positiven Effekt eines höheren Tageslichtangebots allerdings auch zu einer Überhitzung der Büroräume führen, weshalb ein ausreichender Sonnenschutz vorgesehen werden muss. Dieser Sonnenschutz sollte einerseits zumindest teilweise eine Durchsicht nach außen erlauben und zu einer guten Raumausleuchtung führen, aber andererseits auch ausreichend Sonnenschutz bieten und Blendung vermeiden.

### Stand der Technik

Aus der DE 3620285 A1 ist eine Vorrichtung bekannt, die die Funktion eines Sonnenkollektors mit der Funktion einer Sonnenschutzeinrichtung kombiniert. Die Vorrichtung umfasst eine Jalousie mit beweglichen Lamellen, bei der die einzelnen Lamellen als Solarabsorber mit einem integrierten Absorberkanal ausgebildet sind. Ein derartiges System ist jedoch aufwendig und störungsanfällig, da jede Lamelle drehbar und gleichzeitig durchströmbar sein muss.

Die 2840024 A1 beschreibt Sonnenschutzeinrichtungen als Sonnenkollektoren, bei denen der Absorber durch ein Gewebe oder eine Folie gebildet wird, durch den die angrenzende Luft oder aufgebrachtes Wasser erwärmt wird. In einer Ausgestaltung wird auch ein durchströmbarer Folienkollektor beschrieben, bei dem zwei Folien linienförmig derart verschweißt oder verklebt sind, dass durch die Schweiß- oder Klebelinien eine serpentinenartige Flüssigkeitskammer gebildet wird.

DE2949549 offenbart einen Klima-Zaun. Die Aufgabe der vorliegenden Erfindung besteht darin, einen einfach herstellbaren Sonnenkollektor anzugeben, der vor allem bei Anwendungen im Fassadenbau vielseitig einsetzbar ist.

### Darstellung der Erfindung

Die Aufgabe wird mit dem Sonnenkollektor gemäß Patentanspruch 1 gelöst. Vorteilhafte Ausgestaltungen des Sonnenkollektors sind Gegenstand der Unteransprüche oder lassen sich der nachfolgenden Beschreibung sowie den Ausführungsbeispielen entnehmen.

Der vorgeschlagene Sonnenkollektor umfasst einen flachen Absorberkörper, im Folgenden nur als Absorber bezeichnet, an oder in dem ein oder mehrere Absorberkanäle für den Durchfluss eines Wärmeträgermediums ausgebildet sind. Der Absorber ist in Bereichen, die nicht durch ein oder mehrere Absorberkanäle belegt sind, mit durchgängigen Öffnungen für den Durchtritt von Sonnenlicht versehen. Unter Sonnenkollektoren werden in der vorliegenden Patentanmeldung sowohl Elemente mit Verglasung als auch Elemente ohne Verglasung verstanden.

Es handelt sich bei dem vorliegenden Sonnenkollektor um ein statisches Element, das neben der Kollektorfunktion einen teiltransparenten Sonnenschutz bietet. Durch geeignete Anordnung der Absorberkanäle entstehen von Absorberkanälen freie Flächen am Absorber, die für den Durchtritt von Sonnenlicht genutzt werden können. In diese freien Flächen - oder zumindest einen Teil davon - sind durchgängige Öffnungen für den Durchtritt des Sonnenlichts eingebracht. Diese Öffnungen sind derart zwei- oder dreidimensional ausgebildet, dass sie eine winkelselektive Durchlässigkeit für das Sonnenlicht bieten, bei der ein Maximum der Durchlässigkeit bei einem Einfallswinkel von ≠ 90° des Sonnenlichts zur Ebene des Absorbers liegt. Dies ermöglicht einen Blendschutz bei höher stehender Sonne, wobei gleichzeitig ein Durchblick in horizontaler Richtung und/oder nach unten ermöglicht wird. Die Öffnungen sind dabei durch rein lokale Bearbeitung in den Absorber eingebracht, so dass durch die Erzeugung der Öffnungen keine Beanspruchung oder Belastung der restlichen Bereiche des Absorbers auftritt. Dies ermöglicht den Aufbau des Sonnenkollektors aus einem Absorber, in den bereits die Absorberkanäle integriert oder an dem sie angebracht sind, wobei die Öffnungen dann erst nachträglich ohne Beschädigung der Absorberkanäle in den Absorber eingebracht werden können. Die Öffnungen können hierbei beliebige Geometrien aufweisen, bspw. kreisrund oder schlitzförmig sein. Der Absorber selbst besteht vorzugsweise aus einer ebenen oder gekrümmten Platte aus Metall oder Kunststoff. In einer vorteilhaften Ausgestaltung werden sog. Rollbond-Bleche als Absorber eingesetzt, bei denen zumindest ein Teil der Kanäle des Rollbond-Blechs als Absorberkanäle genutzt werden. Die Sonnenstrahlung absorbierende Wirkung wird dabei durch geeignete Beschichtung der Oberfläche, bspw. mit einer spektralselektiven Beschichtung mit einem hohen solaren Absorptionsgrad und einem hohen Reflexionsgrad im thermischen IR, erhalten.

Die Absorberkanäle verzweigen sich beim vorliegenden Sonnenkollektor vorzugsweise mehrfach, bspw. gemäß einer Struktur, wie sie durch das in der EP 1525428 B1 beschriebene Verfahren erhalten wird. Ein derartig aufgebauter Sonnenkollektor, bei dem die Öffnungen vorzugsweise als gleichmäßiges Raster von Bohrungen oder Schlitzen mit relativ kleinem Durchmesser eingebracht sind, bietet ein ästhetisch ansprechendes Design und ist deshalb sehr gut für den Fassadenbau geeignet.

Der vorgeschlagene Sonnenkollektor kann auch transparente vorderseitige und rückseitige Abdeckungen aufweisen, um bspw. als Fensterelement oder als verglastes Fassadenelement eingesetzt zu werden. So kann der Absorber mit den Absorberkanälen insbesondere unter Verwendung der üblichen Fertigungstechnologien des Fenster- und Glasfassadenbaus zwischen zwei oder mehr Glasscheiben eingebaut werden.

In einer bevorzugten Ausgestaltung werden die Außenseite des Absorbers spektralselektiv, bspw. durch geeignete Beschichtung, und die Innenseite diffus reflektierend ausgestaltet. Durch geeignete Behandlung oder Beschichtung kann die Innenseite hierbei auch spektral selektiv ausgeführt werden. Wird der Absorptionsfunktion des Sonnenkollektors die höchste Priorität eingeräumt, so kann auch für die Innenseite eine absorbierende, insbesondere schwarze, Ausgestaltung gewählt werden.

Die Öffnungen können in einer Ausgestaltung durch lokale Entfernung von Material des Absorbers, bspw. mittels Ausstanzen, Ausschneiden oder Bohren, in den Absorber eingebracht sein. Geeignete Techniken sind das Laserschneiden, das Laserbohren oder das Wasserstrahlschneiden.

In einer anderen Ausgestaltung werden sind die Öffnungen durch lokal ausgebogene Bereiche des Absorbers gebildet. Bei der Herstellung wird der Absorber hierzu geeignet eingeschnitten, so dass sich die Öffnungen durch Ausbiegen von Bereichen des Absorbers erzeugen lassen. Die ausgebogenen Bereiche, die in der Regel laschenförmig ausgebildet sind, bleiben dabei mit dem Absorber verbunden und dienen der Lichtführung.

Der vorliegende Sonnenkollektor zeichnet sich damit durch Öffnungen in freien Bereichen zwischen den Absorberkanälen aus, die durch rein lokale Bearbeitung in den Absorber eingebracht sind und somit bei der Herstellung das verbleibende Material des Absorbers und eventuell bereits angebrachte oder integrierte Absorberkanäle nicht belasten. Die Winkelselektivität dieser Durchgangsöffnungen kann bei der Herstellung über deren dreidimensionale Gestaltung nahezu frei gewählt werden, so dass sich der Sonnenkollektor ohne großen Aufwand für die unterschiedlichsten Anwendungen bzw. Anforderungen herstellen lässt. Insbesondere können in unterschiedlichen Abschnitten des Absorbers auch unterschiedlich ausgestaltete Öffnungen vorliegen.

Durch die speziell ausgebildeten Öffnungen werden die gewünschten Sonnenschutz-, Durchsicht-, Blendschutz- und Tageslichtversorgungsanforderungen erfüllt.

Der Sonnenkollektor eignet sich besonders vorteilhaft für den Einsatz im Brüstungsbereich von Bauwerken, da er bei geeigneter Ausgestaltung die Möglichkeit der Durchsicht auch nach schräg unten bietet. Dies betrifft vor allem Brüstungsbereiche von Ganzglasfassaden oder Balkonbrüstungen, sowohl im Wohnungs- als auch im Nichtwohnungsbau.

Der vorliegende Sonnenkollektor lässt sich vorteilhaft für alle Fassadenbereiche einsetzen, die verglast sind, bevorzugt für solche Bereiche, die nicht unmittelbar zur Aussicht dienen und bei denen das Design eine wichtige Rolle spielt. Beispiele hierfür sind horizontale Dachoberlichte, geneigte Fassaden-oder Dachelemente sowie grundsätzlich der Oberlichtbereich und der Brüstungsbereich einer Fassade. In den Wintermonaten lässt sich die mit dem Sonnen- bzw. Solarkollektor gewonnene Wärme selbstverständlich auch auf die Nordseite des Gebäudes pumpen. Die Speicherung der Wärme kann auch in durchströmten Geschossdecken erfolgen, bei Leichtbau auch in Decken mit Phasenwechselmaterial (PCM). Auch eine Nutzung zur Zulufterwärmung durch Wasser-Luft-Wärmetauscher ist möglich.

Neben der Anwendung bei Bürobauten sind selbstverständlich auch andere Anwendungen möglich, bspw. in Hotels, Kliniken oder Sanatorien mit ansprechender Fassadengestaltung und hohem Glasanteil und/oder hohen Anforderungen an Sonnenschutz bei gleichzeitig hoher Brauchwasser- bzw. Heizlast.

In einer Ausgestaltung des vorliegenden Sonnenkollektors sind die Öffnungen durch lokales Einschneiden des Absorbers und Aufbiegen von durch das Einschneiden entstandenen laschenförmigen Bereichen gebildet. Die aufgebogenen Bereiche bleiben dabei mit dem Absorber verbunden, so dass über deren Biegewinkel bzw. Neigung unterschiedliche Effekte der Lichtdurchlässigkeit erreicht werden. So können bei einem senkrecht stehenden Absorber die laschenförmigen Bereiche bspw. nach oben oder nach unten gebogen werden. Selbstverständlich muss der Absorber hierfür unterschiedlich eingeschnitten werden. Eine Öffnung kann auch durch Ausbiegen mehrerer Bereiche erhalten werden. So bietet eine Öffnung mit einem nach oben gebogenen und einem nach unten gebogenen laschenförmigen Bereich über die Biegewinkel eine nahezu beliebige Einstellbarkeit der Verhältnisse von Sonnenschutz, Durchsicht, Blendschutz und Tageslichtversorgung.

In einer vorteilhaften Ausgestaltung wird als Absorber ein durch Rollbonding erhaltenes Blech eingesetzt, bei dem einige der Kanäle nicht als Absorberkanäle genutzt werden, sondern lokal aufgeschnitten und zur Bildung der Öffnungen aufgebogen sind. Auf diese Weise werden bei gleichem Öffnungsdurchmesser bzgl. der Biegerichtung längere ausgebogene Bereiche erhalten als bei einem einfachen Blech, so dass die Sonnenschutzwirkung dadurch noch erhöht werden kann.

In einer sehr vorteilhaften Ausgestaltung des vorliegenden Sonnenkollektors sind die Öffnungen als Schlitze oder Rillen mit einem keilförmigen Querschnittsprofil gebildet. Die Schlitze können vertikal, horizontal oder auch schräg verlaufen, damit die Sonne möglichst gut ausgeblendet wird. Zumindest eine der beiden Seitenwände der keilförmigen Schlitze verläuft nicht senkrecht zur Ebene des Absorbers bzw. zu dessen Oberfläche, sondern unter einem Winkel von < 90°. Über die Wahl der Winkel der beiden Seitenwände sowie der lichten Weite des Schlitzes senkrecht zur Schlitzrichtung, im Folgenden auch als Spaltweite bezeichnet, und die Dicke des Absorbers können auch hier die Sonnenschutzwirkung ebenso wie der Durchsichtwinkel, der Blendschutz und die Tageslichtversorgung gezielt eingestellt werden.

Bei einer weiteren vorteilhaften Ausgestaltung des vorliegenden Sonnenkollektors sind die Öffnungen als Bohrungen ausgebildet, deren zentrale Achse unter einem Winkel von # 90° zur Ebene des Absorbers bzw. zu dessen Oberfläche verläuft. Über den Winkel der zentralen Achse der Bohrungen, den Durchmesser der Bohrungen und die Dicke des Absorbers können die für die jeweilige Anwendung gewünschten Wirkungen des Sonnenschutzes gezielt eingestellt werden. Hierbei ist es auch möglich, dass zumindest einige der Bohrungen nicht parallel zueinander verlaufen.

### Kurze Beschreibung der Zeichnungen

Der vorliegende Sonnenkollektor wird nachfolgend anhand von Ausführungsbeispielen in Verbindung mit den Zeichnungen nochmals kurz erläutert. Hierbei zeigen:
- Fig. 1: ein Beispiel für eine durch Aufbiegen entstandene Öffnung bei einer Ausgestaltung des Sonnenkollektors;
- Fig. 2: vier Beispiele für die Wirkung ausgebogener Elemente bei einer Ausgestaltung des vorliegenden Sonnenkollektors;
- Fig. 3: bevorzugte Winkelbereiche bei dem Aufbiegen der laschenförmigen Elemente;
- Fig. 4: ein Beispiel für den Einsatz eines Rollbond-Bleches als Absorber;
- Fig. 5: ein weiteres Beispiel für eine durch Drehen entstandene Öffnung;
- Fig. 6: ein Beispiel für eine Ausgestaltung des vorliegenden Sonnenkollektors mit keilförmigen Schlitzen als Öffnungen;
- Fig. 7: ein Beispiel für eine Ausgestaltung des Sonnenkollektors mit kreisrunden Bohrungen als Öffnungen;
- Fig. 8: ein Beispiel für die Verwendung des Sonnenkollektors als Balkonbrüstung;
- Fig. 9: ein Beispiel für den optischen Eindruck des Sonnenkollektors;
- Fig. 10: ein weiteres Beispiel für den optischen Eindruck des Sonnenkollektors; und
- Fig. 11: ein weiters Beispiel für den Aufbau des Sonnenkollektors.

### Wege zur Ausführung der Erfindung

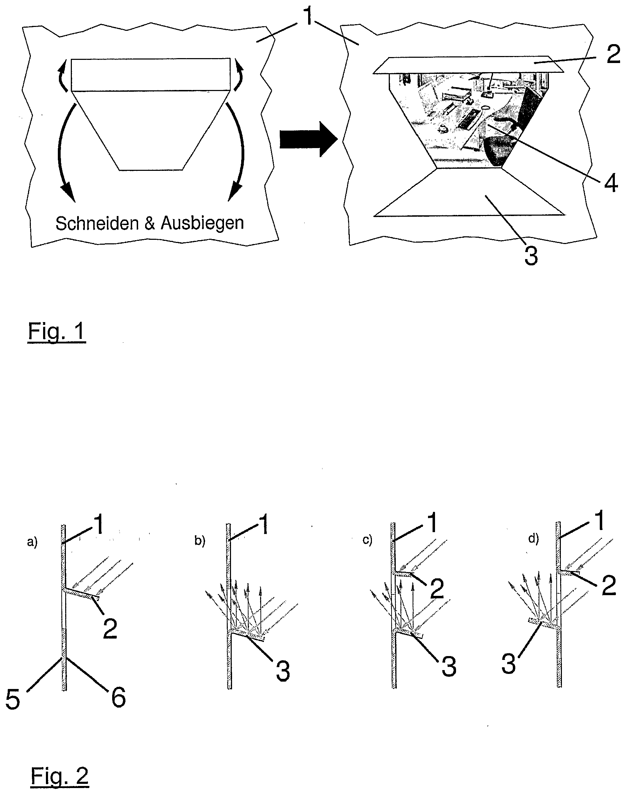

Die Figuren 1 bis 5 zeigen Beispiele für die Ausgestaltung der Öffnungen im Absorber bei einer Ausgestaltungsvariante des vorliegenden Sonnenkollektors, bei der die Öffnungen durch Einschneiden des Absorbers und Aufbiegen der dadurch entstandenen laschenförmigen Bereiche bzw. Elemente erhalten werden.

Figur 1 zeigt hierbei anhand eines Beispiels das Prinzip des Schneidens und Ausbiegens der Öffnungen. Das in diesem Beispiel als Absorber eingesetzte Blech 1 wird an der entsprechenden Stelle der Öffnung eingeschnitten, wie dies im linken Teil der Figur gezeigt ist. Die dadurch erzeugten laschenförmigen Elemente 2, 3 werden nach oben bzw. nach unten ausgebogen, so dass die im rechten Teil der Figur erkennbare Öffnung 4 im Blech 1 entsteht, die von den beiden ausgebogenen Elementen 2 und 3 oben und unten begrenzt wird.

Figur 2 zeigt verschiedene Varianten bei der Biegung der laschenförmigen Elemente, die zu unterschiedlichen Wirkungen im Sonnenschutz führen. Alle der dargestellten vier Varianten haben gemeinsam, dass sie aus einem Blech 1 durch Ausbiegen der laschenförmigen Elemente nach dem Einschneiden einer entsprechenden Struktur in das Blech 1 entstanden sind. Die Orientierung der Elemente kann dabei horizontal, vertikal oder auch schräg sein. Bei einem Einsatz des Sonnenkollektors an einer Süd-West-Fassade bietet bspw. eine schräge Anordnung den größten Vorteil, um die Sonne möglichst gut auszublenden. Wie weit die Strukturen aus der Horizontalen gedreht werden müssen, kann beispielsweise der Veröffentlichung von W. Lorenz "A Glazing Unit for Solar Control, Daylighting and Energy Conservation", Solar Energy 70 (2001) No. 2, pp. 109-130, insbesondere der Abbildung 2 dieser Veröffentlichung, entnommen werden. Im Weiteren wird zur Veranschaulichung von einer horizontalen Anordnung der ausgebogenen Elemente ausgegangen.

Im Beispiel der Figur 2a ist das laschenförmige Element 2 nach oben ausgebogen. Der Winkel δ gegenüber der Vertikalen sollte dabei im Bereich zwischen 0° und 90° liegen, bevorzugt im Bereich zwischen 10° und 60° und besonders bevorzugt bei δ = 40°. In dem Beispiel der Figur 2 ist die momentane Richtung der von schräg vorne einfallenden Sonnenstrahlung mit den Pfeilen gekennzeichnet. Die Ausgestaltung der Figur 2a ermöglicht eine Durchsicht in horizontaler Richtung sowie nach unten bei gleichzeitigem Schutz vor direkter Sonneneinstrahlung. Bei diesen wie auch den anderen Varianten der Figur 2 ist die innere Oberfläche 5 des Absorbers diffus reflektierend ausgebildet, während die äußere Oberfläche mit einer die Sonnenstrahlung absorbierenden Beschichtung 6 versehen ist.

Das Beispiel der Figur 2b zeigt eine Variante, bei der das laschenförmige Element 3 nach unten ausgebogen ist. Der Biegewinkel ε gegenüber der Horiontalen liegt hierbei im Bereich zwischen -20° und +270°, bevorzugt im Bereich zwischen 0° und 90° oder zwischen 180° und 270°. Wenn die Lichtlenkung die höchste Priorität hat, dann wird ein Winkel von -20° ≤ ε ≤45° oder 160° ≤ ε ≤ 225° bevorzugt. Wenn Blend- und Sonnenschutz die höchste Priorität haben, dann wird ein Winkel von 45° ≤ ε <90° oder 225°< ε <270° bevorzugt.

Die Ausbiegung von laschenförmigen Elementen nach oben und unten lässt sich auch kombinieren, wie in den Figuren 2c und 2d gezeigt ist. Je nach Biegewinkel und Biegerichtung können hierbei unterschiedliche Effekte erreicht werden. Die folgende Tabelle zeigt die Wirkungen, wie sie mit den vier Varianten der Figuren 2a bis 2d erreicht werden. Ein "+" gibt hierbei an, dass die entsprechende Wirkung gut erreicht wird, ein "-" gibt an, dass die entsprechende Wirkung nicht gut erreicht wird und eine "0" gibt an, dass die entsprechende Wirkung teilweise erreicht wird.

| | a) | b) | c) | d) |
|---|---|---|---|---|
| Absorption | + | - | 0 | + |
| Durchsicht | + | 0 | 0 | 0 |
| Raumausleuchtung | - | + | + | 0 |
| Blendschutz | + | - | 0 | + |
| Sonnenschutz | + | - | 0 | + |

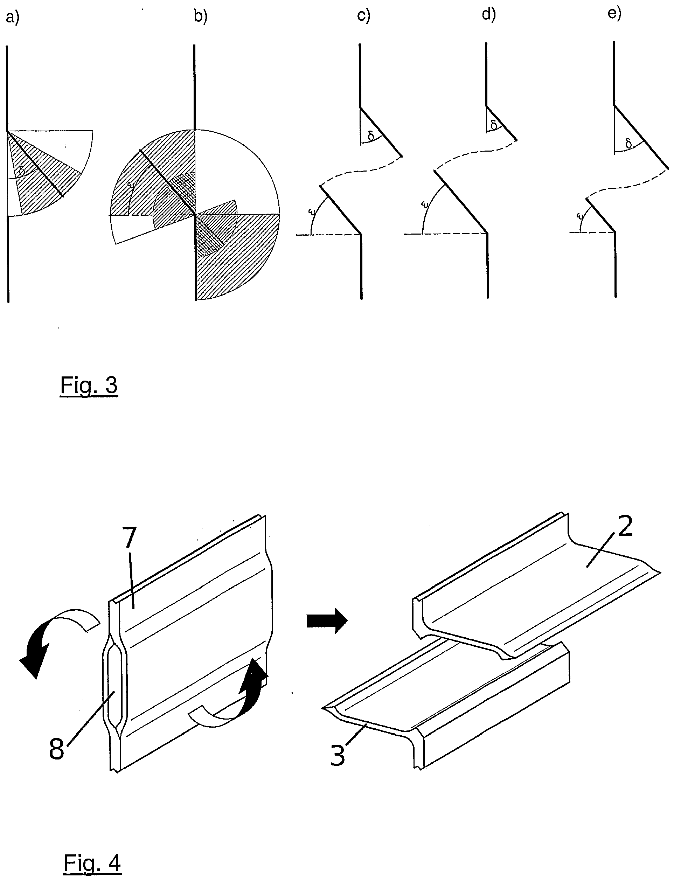

Figur 4 zeigt ein Beispiel, bei dem ein durch Rollbonding erhaltenes Blech, ein sog. Rollbond-Blech 7, als Absorber eingesetzt wird. Bei einem solchen Blech sind nicht verschweißte Bereiche vorhanden, die mittels Druckluft zu Kanälen 7 aufgeblasen werden, wie dies im oberen Teil der Figur 4 schematisch dargestellt ist. Einige dieser Kanäle 7 können als Absorberkanäle für die Durchströmung des Wärmeträgermediums eingesetzt erden. Die verbleibenden Kanäle 7 werden lokal eingeschnitten und aufgebogen, um durchgängige Öffnungen zu erzeugen. Hierdurch werden bei gleichem Öffnungsdurchmesser gegenüber einem einfachen Blech wesentlich längere laschenförmige Elemente 2, 3 erhalten, mit denen die Sonne besser ausgeblendet werden kann. Die scharfe Außenkante dieser Elemente ist aus Gründen des Blendschutzes sehr vorteilhaft, da an dieser Stelle keine Glanzlichter entstehen können. Grundsätzlich wird durch die diffuse Reflexion des Sonnenlichts an den nach unten gebogenen Elementen 3 eine bessere Raumausleuchtung erzielt.

Figur 3 zeigt in den Figuren 3a bis 3e die Winkel δ und ε sowie deren bevorzugte Bereiche. Innerhalb des jeweils dargestellten Gesamtbereiches besteht ein bevorzugter Bereich, der einfach schraffiert angedeutet ist. Der besonders bevorzugte Bereich für die Lichtumlenkung ist stark schraffiert dargestellt, der besonders bevorzugte Bereich für Blend- und Sonnenschutz in gekreuzter Schraffur.

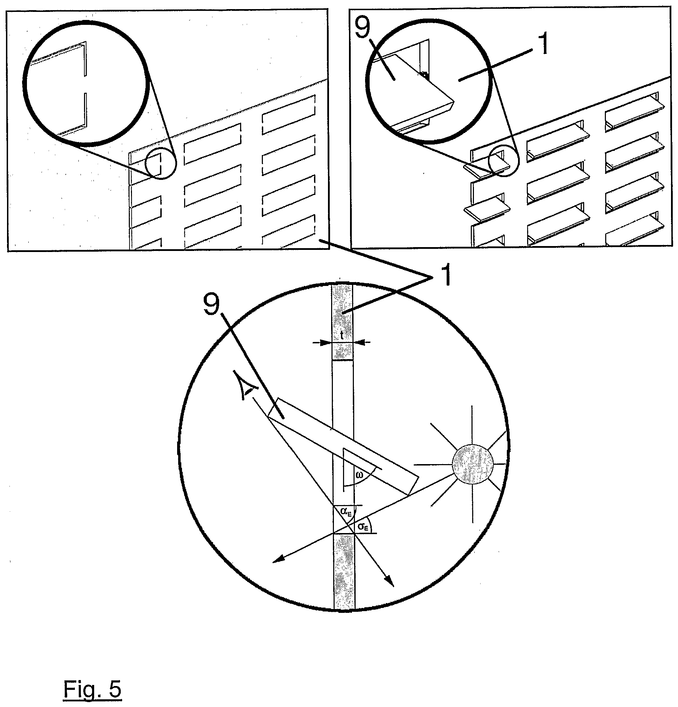

Figur 5 zeigt ein weiteres Beispiel für Öffnungen, die durch Aufbiegen von eingeschnittenen Blechbereichen erzeugt wurden. In diesem Falle wurde das Blech 1 beidseitig einer Öffnungsachse U-förmig eingeschnitten, wie im oberen Teil der Figur zu erkennen, so dass die laschenförmigen Elemente wie eine Lamelle 9 ausgedreht werden können. Dies ist in der Figur 5 auch im Querschnitt veranschaulicht. Auf diese Weise ergeben sich Lamellen 9 ähnlich einer Jalousie. Es können auch mehrere Lamellen 9 direkt untereinander angeordnet werden. Für den Winkelbereich σ_{E} gilt in diesem Fall: 0° ≤ σ_{E} ≤80°, bevorzugt 0°≤ σ_{E} ≤45°, besonders bevorzugt 5°≤ σ_{E} ≤25°.

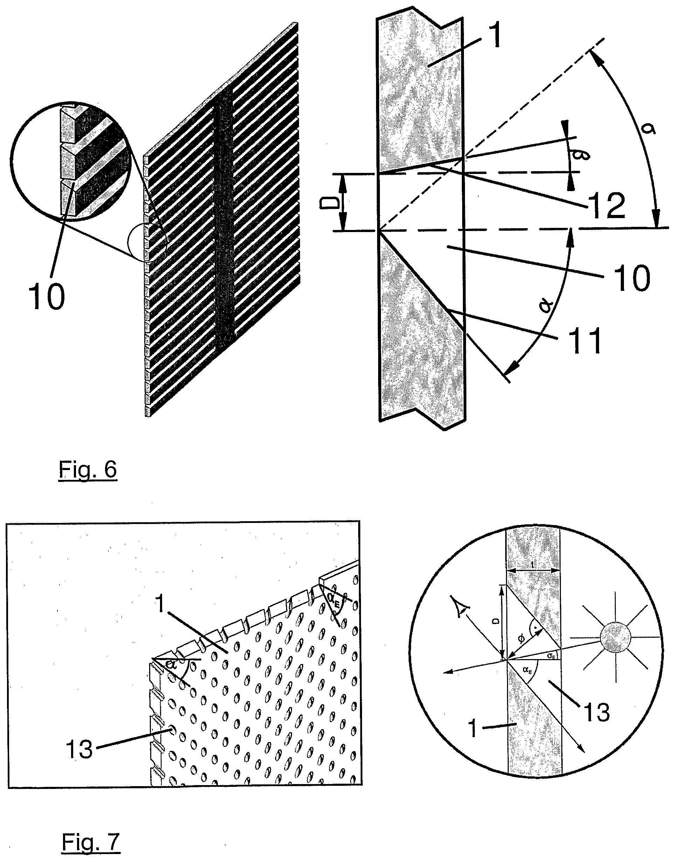

Figur 6 zeigt eine weitere Möglichkeit der Ausgestaltung des vorliegenden Sonnenkollektors, bei der die winkelselektive Sonnenschutzstruktur nicht durch Ausbiegen von Blechelementen, sondern durch Ausschneiden keilförmiger Längsrillen 10 gebildet wird. Dies kann bspw. mittels Laserschneiden erfolgen. Die Rillen 10 können vertikal, horizontal oder auch schräg verlaufen, damit die Sonne möglichst gut ausgeblendet wird. An einer Süd-West-Fassade ist eine schräge Anordnung vorteilhaft (vgl. Veröffentlichung von W. Lorenz a.a.O.). Im Weiteren wird zur Veranschaulichung von horizontalen Rillen ausgegangen. Dabei ist die untere Seitenwand 11 der Rille 10 vorteilhafter Weise nach außen unten abgeschrägt, um eine Durchsicht nach unten zu ermöglichen. Die Winkel α und β werden gegen die Horizontale gemessen. σ ist der Ausblendwinkel für die Sonne. Der Winkel α beträgt vorzugsweise zwischen 0° und 85°, der Winkel β, der die Neigung der oberen Seitenwand 12 gegen die Horizontale angibt, vorzugsweise zwischen -20° und +10°.

In der Regel haben die Blendschutzanforderungen und die Durchsicht nach außen eine höhere Priorität als die Tageslichtversorgung des Raumes. Störende Reflexe sollen daher auf jeden Fall vermieden werden. Die untere Seitenwand 11 sollte daher in der Regel steiler als 45° aus der Horizontalen gedreht sein (α ≥ 45°), damit horizontal einfallendes Sonnenlicht nicht nach innen, sondern nach oben umgelenkt wird. Licht mit größerem Höhenwinkel wird dann ebenfalls nach außen reflektiert, weil der Einfallswinkel gleich dem Ausfallswinkel ist. Die Winkelangaben für α gelten unabhängig von der Neigung der Fassade, an der die Sonnenschutzvorrichtung angebracht wird. Sie leiten sich nur aus den möglichen Sonnenpositionen ab.

Wenn die Tageslichtversorgung eine höhere Priorität hat, bspw. im oberen Segment eines Fensterbandes oder oberhalb der Kopfhöhe, sollte das Licht in den Raum reflektiert werden (d.h. α < 45°). Auch diese Winkelangabe für α gilt unabhängig von der Neigung der Fassade, sondern leitet sich aus den möglichen Sonnenpositionen am jeweiligen Ort der Anbringung ab.

Die obere Seitenwand 12 sollte vorteilhafter Weise so um den Winkel β gegen die Horizontale nach oben geneigt sein, dass die direkte Sonne die meiste Zeit nicht streifend an der Fläche entlang in den Raum scheinen kann (-20°≤ β ≤10°). Besonders bevorzugt wird der Winkel β so gewählt, dass gilt: -10°≤ β ≤0°. Varianten mit |β| > 10° sind zwar ebenfalls möglich, allerdings handelt es sich hierbei um verschlechterte Ausführungsformen. Die Winkelangaben für β gelten unabhängig von der Neigung der Fassade. Sie leiten sich nur aus den möglichen Sonnenpositionen ab.

Ein weiterer Parameter zur Einstellung der Blendschutzwirkung ist die Spaltweite D, die die lichte Weite an der Innenseite der Rille 10 angibt. Damit legt D fest, ab welchem Sonnen-Profilwinkel αₚ = σ die Sonne direkt durch die Rillen bzw. Spalte im Absorber scheinen kann. Der Profilwinkel ist die Projektion des Sonnen-Höhenwinkels auf eine vertikale Ebene, die senkrecht zum Absorber steht. Bei einem Fassaden-Azimut = Sonnen-Azimut stimmt der Profilwinkel mit dem Höhenwinkel der Sonne überein. Die Festlegung der Spaltweite kann also in diesem Spezialfall erfolgen, wie dies bspw. auch in der Figur 7 in der rechten Teilabbildung veranschaulicht ist. Unabhängig von der Neigung der Fassade soll die Spaltweite so gewählt werden, dass die direkte Sonne ab einem Profilwinkel von -20°≤ αₚ=σ ≤70°, bevorzugt 0°≤ αₚ=σ ≤45° und besonders bevorzugt 5°≤ αₚ=σ ≤25° ausgeblendet wird.

Figur 7 zeigt hierzu ein weiteres Beispiel des vorliegenden Sonnenkollektors, bei der die Öffnungen durch schräg gebohrte Löcher 13 gebildet sind. Diese Löcher 13 können bspw. mit einem Laser erzeugt werden. Die Löcher 13 weisen vorteilhafterweise schräg nach außen unten, um eine Durchsicht in diese Richtung zu ermöglichen.

Wenn hohe Blendschutzanforderungen bestehen, ist es sinnvoll, zunächst die Löcher 13 in den Absorber 1 einzubringen und dann den Absorber 1 spektralselektiv oder matt schwarz zu beschichten, damit die von der Sonne beschienene Wandung der Bohrung bzw. des Loches 13 ebenfalls beschichtet ist. Mit den im rechten Teil der Figur 7 definierten Winkeln gilt: Ø = t * cos(α_{E}) * (tan(α_{E}) + tan(σ_{E})). Bei gegebener Blechstärke t bzw. Stärke des Absorbers und gewünschten Winkeln α und σ ergibt sich somit der notwenige Lochdurchmesser Ø.

Es ist in vielen Fällen sinnvoll, wenn die Löcher 13 nicht parallel sind, damit auch seitlich eine gewisse Transparenz besteht. Die Richtungen der zentralen Achsen der Löcher 13 sollten aber vorteilhafter Weise alle in einer Ebene enthalten sein, die um den Winkel α_{E} aus der Horizontalen nach unten gedreht ist und mit dem Absorber eine Horizontale Schnittlinie hat (vgl. Figur 7).

Die unten angegebenen Winkelbereiche für α_{E} sind auch bei nicht vertikalen Fassaden gültig (bspw. bei Dachfenstern), denn α_{E} leitet sich nur von der Sonnenposition ab und nicht von der Neigung der Fassade. Deshalb ist α_{E} gegen die Horizontale definiert, unabhängig von der Neigung des Absorberkörpers. Bei nicht nach Süden orientierten Fassaden ist es vorteilhaft, wenn die Schnittlinie mit dem Absorber nicht horizontal ist sondern geneigt, damit die Sonne möglichst gut ausgeblendet wird.

Für den Winkelbereich von σ_{E} gilt: -20°≤ σ_{E} ≤80°, bevorzugt 0°≤ σ_{E} ≤45°, besonders bevorzugt 5°≤ σ_{E} ≤25°.

Für den Winkelbereich von α_{E} gilt: 0°≤ α_{E} ≤85°. Wenn hohe Blendschutzanforderungen bestehen, ist α_{E} vorzugsweise > 45°, weil dann direkt einfallende Strahlung nach außen oben reflektiert wird. Horizontal einfallende Strahlung wird bei α_{E} = 45° senkrecht nach oben reflektiert. In der Regel bestehen hohe Blend-schutzanforderungen, weil durch Streulicht auch die Durchsicht verschlechtert werden kann.

Wenn keine hohen Blendschutzanforderungen bestehen und Tageslichtnutzung wichtig ist, dann liegt der Winkel α_{E} bei < 45°, weil dann von außen einfallende Direktstrahlung tendenziell nach innen an die Decke gelenkt wird. Je kleiner α_{E}, desto mehr Licht wird nach innen gelenkt.

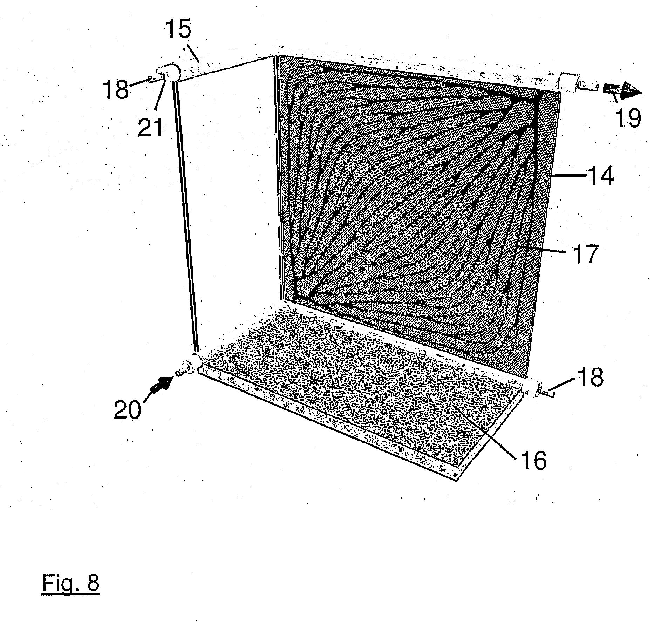

Figur 8 zeigt ein Beispiel, bei der der vorgeschlagene Sonnenkollektor als Balkonbrüstung eingesetzt wird. Bei dieser Ausführung werden ein oder mehrere der Sonnenkollektoren 14 zwischen dem Handlauf 15 und der Bodenplatte 16 des Balkons montiert und die Absorberkanäle 17 parallel an Sammelkanäle 18 für den Rücklauf 20 und den Vorlauf 19 angeschlossen, die von einer Wärmedämmung 21 und einem Mantelrohr umhüllt werden. Letzteres dient gleichzeitig als Handlauf 15, bspw. aus Edelstahl, so dass es zwei Funktionen erfüllt und damit eine ästhetische Lösung für die Bereitstellung der zum Kollektorbetrieb notwenigen Infrastruktur ermöglicht. Die Öffnungen sind hierbei so ausgebildet, dass eine Durchsicht schräg nach unten ermöglicht wird, eine Durchlässigkeit für das Sonnenlicht oberhalb eines Sonnenwinkels von 25° jedoch verhindert wird.

Bei geeigneter Ausrichtung des Balkons können die parallel verschalteten Absorber auch winklig zueinander stehen. So könnte bspw. bei der in der Figur gezeigten Ausgestaltung zwischen den links im Bereich des Rücklaufs dargestellten Glasscheiben ein weiterer Absorber installiert werden.

Der vorgeschlagene Sonnenkollektor lässt sich besonders vorteilhaft für die solare Kühlung einsetzen, insbesondere in Bürobauten mit hohen internen Lasten. Er lässt sich auch für die solare sorptionsgestützte Klimatisierung nützen. Eine Erhöhung der Temperatur kann evtl. durch einen nachgeschalteten Hochtemperatur-Sonnenkollektor oder mittels konventioneller Nacherhitzung erfolgen. Die solare Kühlung kann auch nur geschossweise erfolgen, bspw. zur Kühlung eines Seminarraums. Dadurch können raum- und kostenintensive Installationen über mehrere Geschosse entfallen. Die Gleichzeitigkeit von Kühllast und Kollektorertrag begünstigt diese Anwendung. Der Sonnenschutz reduziert gleichzeitig die internen Wärmelasten. Der übrige Kühlbedarf kann durch die solare Kühlung abgedeckt werden.

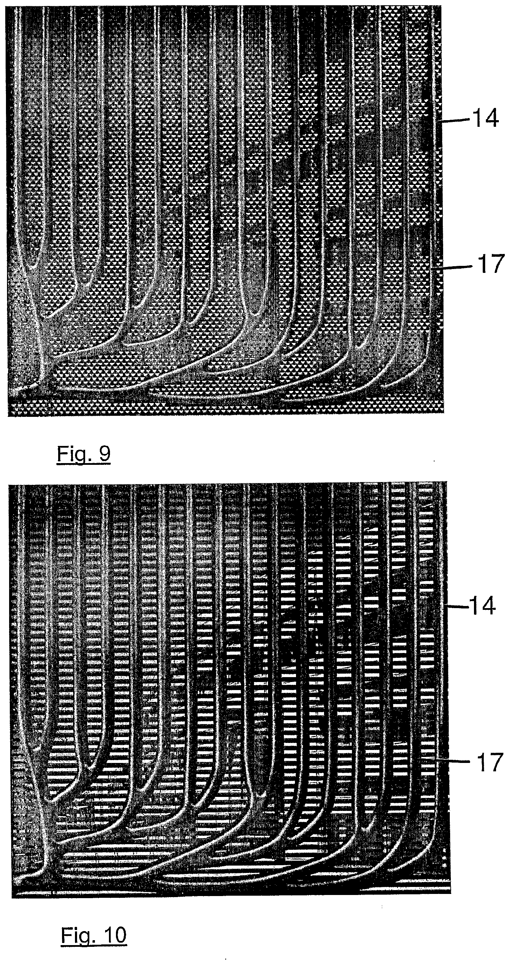

Die Figuren 9 und 10 zeigen zwei Ausgestaltungen des Sonnenkollektors 14 mit unterschiedlicher Optik. Bei der Ausgestaltung der Figur 9 sind trapezförmige Öffnungen im Absorber eingebracht. Die Ausgestaltung der Figur 10 zeigt den optischen Eindruck bei einer Ausgestaltung des Sonnenkollektors mit feinen Schlitzen als Öffnungen. In beiden Ausgestaltungen bilden die Absorberkanäle 17 eine ästhetisch ansprechende mehrfach verzweigte Struktur. Die Absorberkanäle können hierbei, wie auch bei anderen Ausgestaltungen, als separate Rohre auf den Absorber aufgelötet oder aufgeschweißt sein oder, bspw. bei Verwendung eines Rollbond-Bleches, in den Absorber integriert sein.

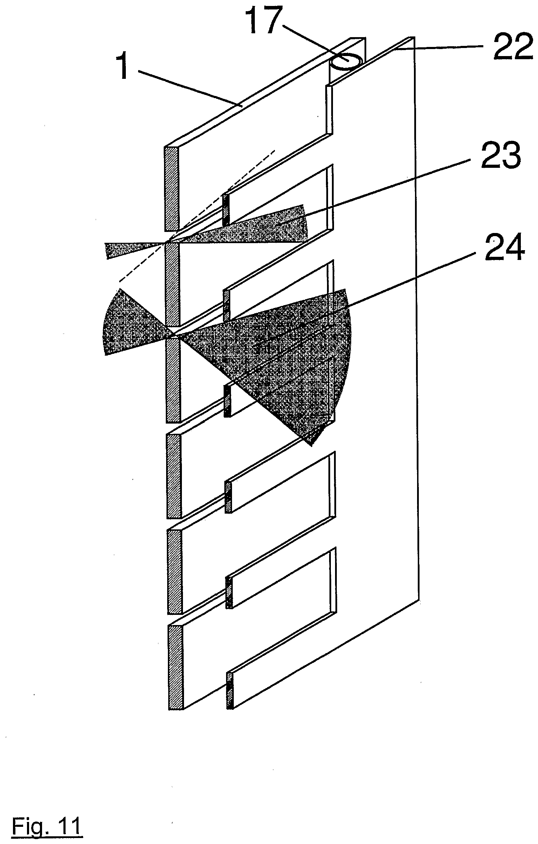

Figur 11 zeigt ein weiteres Beispiel für den Aufbau eines Sonnenkollektors, bei dem ein zweites Absorberblech 22 auf einer Seite des Sonnenkollektors in thermischem Kontakt mit den Absorberkanälen 17 ist. Das weitere Absorberblech 22 kann bei dieser SandwichBauweise beispielsweise aufgelötet oder aufgeschweißt sein. Durch die in dem weiteren Absorberblech 22 vorhandenen Schlitze wird in Zusammenwirkung mit den Schlitzen im anderen Absorberblech 1 ebenfalls eine winkelselektive Durchlässigkeit für das Sonnenlicht erreicht.

Das Absorberblech 22 auf der sonnenzugewandten Seite (Primärabsorber) ist ebenso wie das andere Absorberblech 1 (Sekundärabsorber) in diesem Beispiel spektralselektiv beschichtet. Der dargestellte Absorberkanal 17 kann bei einem Rollbondabsorber mit dem Absorberblech 1 eine Einheit bilden. Der mit Bezugszeichen 23 angedeutete Bereich entspricht dem Bereich des Sonnenlichts, das nicht ausgeblendet wird, also durch die Schlitze scheinen kann. Der mit Bezugszeichen 24 angedeutete Bereich entspricht dem Bereich der Durchsicht von innen (linke Seite: innen; rechte Seite: außen).

Die gestrichelte Linie zeigt, dass die Geometrie so ausgelegt ist, dass Sonnenstrahlen mit kleineren Profilwinkeln (flacher) auf den Primär- und mit größeren Profilwinkeln (steiler) auf den Sekundärabsorber treffen. Die gestrichelte Linie stellt den Grenzfall dar; sie berührt die sonnenabgewandte untere Kante des Schlitzes des Primärabsorbers, die sonnenzugewandte obere Kante und die sonnenabgewandte untere Kante des Sekundärabsorbers. Die Sonne kann also nur im Bereich von 23 durch die Schlitze scheinen (theoretisch auch schräg von unten, dies ist jedoch nur bei geneigten Kollektoren relevant). Wichtig ist, dass die Absorberkanäle 17 in sehr gutem thermischen Kontakt mit Primär- und Sekundärabsorber stehen, damit die entstehende effizient Wärme abtransportiert werden kann.
(A) Der vorgeschlagene Sonnenkollektor weist somit einen flachen Absorberkörper auf, an oder in dem ein oder mehrere Absorberkanäle für den Durchfluss eines Wärmeträgermediums ausgebildet sind. Der Absorberkörper weist in Bereichen, die nicht durch die ein oder mehreren Absorberkanäle belegt sind, durchgängige Öffnungen für den Durchtritt von Sonnenlicht auf. Die durchgängigen Öffnungen haben eine winkelselektive Durchlässigkeit für das Sonnenlicht, bei der ein Maximum der Durchlässigkeit bei einem Einfallswinkel von ≠ 90° des Sonnenlichts zur Ebene des Absorberkörpers liegt. Vorzugsweise verzweigen sich die Absorberkanäle in oder an diesem Absorberkörper mehrfach. Vorzugsweise ist dieser Absorberkörper aus einem mittels Rollbonding hergestellten Blech gebildet, wobei zumindest ein Teil der in dem Blech ausgebildeten Kanäle die Absorberkanäle darstellen. Vorzugsweise ist dieser Absorberkörper in den Bereichen, die nicht durch die ein oder mehreren Absorberkanäle belegt sind, matrixförmig mit runden oder polygonförmigen Öffnungen oder mit schlitzförmigen Öffnungen perforiert.
(B) Bei dem vorgeschlagenen Sonnenkollektor gemäß Punkt (A) sind die Öffnungen vorzugsweise durch lokales Einschneiden des Absorberkörpers und Aufbiegen von dadurch entstandenen laschenförmigen Bereichen erhalten. Vorzugsweise steht dabei zumindest einer der laschenförmigen Bereiche einer Öffnung nicht senkrecht zu einer Oberfläche des Absorberkörpers. Vorzugsweise ist bei einem Absorberkörper aus einem mittels Rollbonding hergestellten Blech ein Teil der in dem Blech ausgebildeten Kanäle lokal aufgeschnitten und aufgebogen, um die Öffnungen zu bilden.
(C) Der vorgeschlagene Sonnenkollektor gemäß Punkt (B) weist vorzugsweise folgende Merkmale auf:
   - Zumindest einige der laschenförmigen Bereiche sind zu einer ersten Seitenkante des Absorberkörpers hin um einen Winkel ausgebogen, der zwischen 5° und 90°, vorzugsweise zwischen 10° und 50°, zur Ebene des Absorberkörpers liegt;
      oder
   - bei vertikaler Aufstellung des Absorberkörpers sind zumindest einige der laschenförmigen Bereiche nach oben um einen Winkel ausgebogen, der derart gewählt ist, dass in einem Schnitt der betroffenen Öffnungen mit einer vertikalen Ebene senkrecht zum Absorberkörper eine geradlinige Verbindungslinie zwischen einer Unterkante der Öffnung auf einer Seite des Absorberkörpers und einer Oberkante der Öffnung auf einer gegenüberliegenden Seite des Absorberkörpers unter einem Winkel zur Normalen auf den Absorberkörper steht, der zwischen 0° und 45°, vorzugsweise zwischen 5° und 25°, beträgt;
      und/oder
   - zumindest einige der laschenförmigen Bereiche sind zu einer zweiten Seitenkante des Absorberkörpers hin um einen Winkel ausgebogen, der zwischen -20° und 270° zur Senkrechten auf die Ebene des Absorberkörpers liegt, wobei vorzugsweise der Winkel, um den die laschenförmigen Bereiche zur zweiten Seitenkante des Absorberkörpers hin ausgebogen sind, im Bereich zwischen 0° und 90° oder zwischen 180° und 270° oder zwischen -20° und +45° oder zwischen 160° und 225° oder zwischen 45° und 90° oder zwischen 225° und 270° liegt, und/oder wobei vorzugsweise die zweite Seitenkante der ersten Seitenkante gegenüber liegt bzw. eine untere Seitenkante des Absorberkörpers darstellt, wobei für zumindest einige der Öffnungen ein erster laschenförmiger Bereich zur ersten Seitenkante bzw. nach oben und ein zweiter laschenförmiger Bereich zur zweiten Seitenkante hin ausgebogen sind.

### Bezugszeichenliste

- 1: Blech
- 2: oberes laschenförmiges Element
- 3: unteres laschenförmiges Element
- 4: Öffnung
- 5: diffus reflektierende innere Oberfläche
- 6: absorbierende Beschichtung
- 7: Rollbond-Blech
- 8: Kanal
- 9: Lamelle
- 10: keilförmige Rillen
- 11: untere Seitenwand
- 12: obere Seitenwand
- 13: Löcher
- 14: Sonnenschutzvorrichtung
- 15: Handlauf
- 16: Bodenplatte
- 17: Absorberkanäle
- 18: Sammelkanäle
- 19: Vorlauf
- 20: Rücklauf
- 21: Wärmedämmung
- 22: weiteres Absorberblech
- 23: Bereich des nicht ausgeblendeten Sonnenlichts
- 24: Bereich der Durchsicht von innen

## Patentansprüche

1. Sonnenkollektor, der im Fassadenbau oder als Balkonbrüstung einsetzbar ist, mit einem flachen Absorberkörper (1), an oder in dem ein oder mehrere Absorberkanäle (17) für den Durchfluss eines Wärmeträgermediums ausgebildet sind, wobei der Absorberkörper (1) in Bereichen, die nicht durch die ein oder mehreren Absorberkanäle (17) belegt sind, durchgängige Öffnungen (4, 10, 13) für den Durchtritt von Sonnenlicht aufweist und entweder ohne Verglasung oder zwischen einer vorderseitigen und einer rückseitigen transparenten Abdeckung angeordnet ist, **dadurch gekennzeichnet, dass** die durchgängigen Öffnungen (4, 10, 13) durch lokale Entfernung von Material des Absorberkörpers (1) oder durch lokales Einschneiden des Absorberkörpers und Aufbiegen von dadurch entstandenen laschenförmigen Bereichen erhalten sind und eine winkelselektive Durchlässigkeit für das Sonnenlicht aufweisen, bei der ein Maximum der Durchlässigkeit bei einem Einfallswinkel von ≠ 90° des Sonnenlichts zur Ebene des Absorberkörpers (1) liegt und derart ausgebildet sind, dass im Einsatz des Sonnenkollektors als Fassadenelement oder als Balkonbrüstung ein Blendschutz bei höher stehender Sonne sowie gleichzeitig ein Durchblick in horizontaler Richtung und/oder nach unten ermöglicht wird.

2. Sonnenkollektor nach Anspruch 1,
**dadurch gekennzeichnet,**
**dass** sich die Absorberkanäle (17) im oder am Absorberkörper (1) mehrfach verzweigen.

3. Sonnenkollektor nach Anspruch 1 oder 2,
**dadurch gekennzeichnet,**
**dass** der Absorberkörper (1) in den Bereichen, die nicht durch die ein oder mehreren Absorberkanäle (17) belegt sind, matrixförmig mit runden oder polygonförmigen oder schlitzförmigen Öffnungen (4, 10, 13) perforiert ist.

4. Sonnenkollektor nach einem der Ansprüche 1 bis 3,
**dadurch gekennzeichnet,**
**dass** die Öffnungen (4, 10, 13), die durch lokale Entfernung von Material des Absorberkörpers (1) erhalten sind, Schlitze mit einem keilförmigen Querschnittsprofil sind, bei denen zumindest eine Seitenwand (11, 12) nicht senkrecht zu einer Oberfläche des Absorberkörpers (1) verläuft.

5. Sonnenkollektor nach einem der Ansprüche 1 bis 3,
**dadurch gekennzeichnet,**
**dass** die Öffnungen (4, 10, 13), die durch lokale Entfernung von Material des Absorberkörpers (1) erhalten sind, Bohrungen mit zentralen Achsen sind, die nicht senkrecht zu einer Oberfläche des Absorberkörpers (1) verlaufen.

6. Sonnenkollektor nach Anspruch 5,
**dadurch gekennzeichnet,**
**dass** bei vertikaler Aufstellung des Absorberkörpers (1) die zentralen Achsen der Bohrungen so verlaufen, dass bei einer Parallel-Projektion der Bohrungen parallel zur Ebene des Absorberkörpers (1) auf eine vertikale Projektionsebene senkrecht zum Absorberkörper (1) die Projektionen der zentralen Achsen parallel zueinander sind und dass in der Parallel-Projektion eine geradlinige Verbindungslinie zwischen einer Unterkante der jeweiligen Bohrung auf einer Seite des Absorberkörpers (1) und einer Oberkante der Bohrung (4, 10, 13) auf einer gegenüberliegenden Seite des Absorberkörpers (1) unter einem Winkel zur Normalen auf den Absorberkörper (1) steht, der zwischen 0° und 45°, vorzugsweise zwischen 5° und 25° beträgt.

7. Sonnenkollektor nach Anspruch 6,
**dadurch gekennzeichnet,**
**dass** zumindest einige der Bohrungen nicht parallel verlaufen und bevorzugt die Bohrungen in Reihen angeordnet sind und die zentralen Achsen der Bohrungen jeder Reihe jeweils in einer Ebene liegen.

8. Sonnenkollektor nach einem der Ansprüche 1 bis 3,
**dadurch gekennzeichnet,**
**dass** der Absorberkörper (1), in dem die Öffnungen (4, 10, 13) durch lokales Einschneiden und Aufbiegen von dadurch entstandenen laschenförmigen Bereichen erhalten sind, aus einem mittels Rollbonding hergestellten Blech (7) gebildet ist, wobei zumindest ein Teil der in dem Blech (7) ausgebildeten Kanäle (8) die Absorberkanäle (17) darstellen.

9. Sonnenkollektor nach Anspruch 8,
**dadurch gekennzeichnet,**
**dass** ein Teil der in dem Blech (7) ausgebildeten Kanäle (8) lokal aufgeschnitten und aufgebogen sind, um die Öffnungen (4, 10, 13) zu bilden.

10. Sonnenkollektor nach Anspruch 4,
**dadurch gekennzeichnet,**
**dass** zumindest bei einigen der Schlitze eine erste Seitenwand (11) unter einem Winkel von ≥ 45° oder unter einem Winkel von < 45° zur Senkrechten auf die Ebene des Absorberkörpers (1) verläuft, und dass eine zweite Seitenwand (12) unter einem Winkel zwischen -10° und 0° zur Senkrechten auf die Ebene des Absorberkörpers (1) verläuft.

11. Sonnenkollektor nach Anspruch 4,
**dadurch gekennzeichnet,**
**dass** bei vertikaler Aufstellung des Absorberkörpers (1) Winkel, um die eine obere Seitenwand (12) und eine untere Seitenwand (11) zur Normalen auf die Ebene des Absorberkörpers (1) verlaufen, derart gewählt sind, dass in einem Schnitt der betroffenen Schlitze mit einer vertikalen Ebene senkrecht zum Absorberkörper (1) und zu einer Schlitzlängsrichtung eine geradlinige Verbindungslinie zwischen einer Unterkante des Schlitzes auf einer Seite des Absorberkörpers (1) und einer Oberkante des Schlitzes auf einer gegenüberliegenden Seite des Absorberkörpers (1) unter einem Winkel zur Normalen auf den Absorberkörper (1) steht, der zwischen 0° und 45°, vorzugsweise zwischen 5° und 25°, beträgt,
und/oder dass eine Spaltweite der Schlitze so gewählt ist, dass bei vertikaler Aufstellung des Absorberkörpers (1) in einem Schnitt der betroffenen Schlitze mit einer vertikalen Ebene senkrecht zum Absorberkörper (1) und zu einer Schlitzlängsrichtung eine geradlinige Verbindungslinie zwischen einer Unterkante des Schlitzes auf einer Seite des Absorberkörpers (1) und einer Oberkante des Schlitzes auf einer gegenüberliegenden Seite des Absorberkörpers (1) unter einem Winkel zur Normalen auf den Absorberkörper (1) steht, der zwischen 0° und 45°, vorzugsweise zwischen 5° und 25°, beträgt.

12. Sonnenkollektor nach Anspruch 5, 6 oder 7,
**dadurch gekennzeichnet,**
**dass** ein Durchmesser der Bohrungen so gewählt ist, dass bei vertikaler Aufstellung des Absorberkörpers (1) in einer Parallel-Projektion der Bohrungen parallel zur Ebene des Absorberkörpers auf eine vertikale Projektionsebene senkrecht zum Absorberkörper (1) eine geradlinige Verbindungslinie zwischen einer Unterkante der jeweiligen Bohrung auf einer Seite des Absorberkörpers (1) und einer Oberkante der Bohrung (4, 10, 13) auf einer gegenüberliegenden Seite des Absorberkörpers (1) unter einem Winkel zur Normalen auf den Absorberkörper (1) steht, der zwischen 0° und 45°, vorzugsweise zwischen 5° und 25° beträgt.

13. Sonnenkollektor nach einem der Ansprüche 1 bis 12,
**dadurch gekennzeichnet,**
**dass** die Absorberkanäle (17) auf einer Seite mit einem weiteren Absorberkörper (22) in thermischem Kontakt stehen, der weitere durchgängige Öffnungen für den Durchtritt von Sonnenlicht aufweist, wobei die weiteren Öffnungen derart angeordnet und ausgebildet sind, dass sie durch Zusammenwirken mit den Öffnungen (4, 10 ,13) im anderen Absorberkörper (1) eine winkelselektive Durchlässigkeit des Sonnenkollektors für das Sonnenlicht erreichen.

14. Sonnenkollektor nach einem der Ansprüche 1 bis 13,
**dadurch gekennzeichnet,**
**dass** die sonnenzugewandte Seite des Absorberkörpers (1) Sonnenstrahlung absorbierend, insbesondere spektralselektiv, ausgebildet oder beschichtet ist.

15. Sonnenkollektor nach Anspruch 14,
**dadurch gekennzeichnet,**
**dass** die sonnenabgewandte Seite des Absorberkörpers (1) Sonnenstrahlung absorbierend ausgebildet oder beschichtet ist.

16. Sonnenkollektor nach Anspruch einem der Ansprüche 1 bis 15,
**dadurch gekennzeichnet,**
**dass** die vorderseitige und/oder die rückseitige transparente Abdeckung hauptsächlich aus Glas oder Kunststoff, vorzugsweise aus einer Isolierverglasung, bestehen.

17. Sonnenkollektor nach Anspruch einem der Ansprüche 1 bis 16,
**dadurch gekennzeichnet,**
**dass** die vorderseitige und/oder die rückseitige transparente Abdeckung aus einem Wärmedämmmaterial bestehen.

18. Sonnenkollektor nach einem der Ansprüche 1 bis 17,
**dadurch gekennzeichnet,**
**dass** die vorderseitige und die rückseitige transparente Abdeckung durch eine Folie gebildet sind.

19. Sonnenkollektor nach einem der Ansprüche 1 bis 18,
**dadurch gekennzeichnet,**
**dass** die vorderseitige und die rückseitige transparente Abdeckung einen gasdichten Hohlraum bilden, der mit einem Edelgas gefüllt oder der evakuiert und mit Abstandshaltern zwischen den Abdeckungen gestützt ist.

20. Sonnenkollektor nach einem der Ansprüche 1 bis 18,
**dadurch gekennzeichnet,**
**dass** die vorderseitige und die rückseitige transparente Abdeckung einen Hohlraum bilden, der nach außen hinterlüftet ist.

21. Sonnenkollektor nach Anspruch 19,
**dadurch gekennzeichnet,**
**dass** eine Innenseite der vorderseitigen und/oder der rückseitigen transparenten Abdeckung mit einer niedrig emittierenden Schicht, insbesondere auf Basis eines nicht witterungsstabilen "Soft Coatings", versehen ist und/oder dass die rückseitige transparente Abdeckung aus einer Mehrfach-Isolierverglasung besteht, bei der eine Innenseite einer äußersten Scheibe der Isolierverglasung mit einer niedrig emittierenden Schicht auf Basis eines nicht witterungsstabilen "Soft Coatings" versehen ist.

## Claims

1. A solar panel which can be used in façade construction or as a balcony parapet, having a flat absorber body (1) on or in which one or more absorber channels (17) are conformed for the throughflow of a heat transfer medium, wherein the absorber body (1) has uninterrupted openings (4, 10, 13) for sunlight to pass through in areas that are not occupied by the one or more absorber channels (17) and is disposed either without glazing or between a front-side and a rear-side transparent cover and a rear-side transparent cover, **characterised in that** the uninterrupted openings (4, 10, 13) are obtained by local removal of material of the absorber body (1) or by cutting into the absorber body locally and bending up the flap-like areas created thereby and have an angularly selective permeability to sunlight at which a maximum of the permeability occurs when the angle of incidence of the sunlight to the plane of the absorber body (1) is ≠ 90°, and are conformed such that when the solar panel is used as a façade element or a balcony parapet a glare protection while simultaneously allowing visibility horizontally and/or downwards through the panel is enabled when the sun is high.

2. The solar panel according to claim 1,
**characterised in**
**that** the absorber channels (17) in or on the absorber body (1) branch multiple times.

3. The solar panel according to claim 1 or 2,
**characterised in**
**that** the absorber body (1) is perforated in an array with round or polygonal or slit-shaped openings (4, 10, 13) in areas that are not occupied by the one or more absorber channels (17).

4. The solar panel according to any one of claims 1 to 3,
**characterised in**
**that** the openings (4, 10, 13) that are obtained by local removal of the material of the absorber body (1) are slits with a wedge-shaped cross-sectional profile, in which at least one side wall (11, 12) does not run perpendicularly to a surface of the absorber body (1).

5. The solar panel according to any one of claims 1 to 3,
**characterised in**
**that** the openings (4, 10, 13) that are obtained by local removal of the material of the absorber body (1) are boreholes having central axes which do not run perpendicularly to a surface of the absorber body (1).

6. The solar panel according to claim 5,
**characterised in**
**that** when the absorber body (1) is positioned vertically the central axes of the boreholes run in such manner that with a parallel projection of the boreholes parallel to the plane of the absorber body (1) onto a vertical projection plane perpendicular to the absorber body (1) the projections of the central axes are parallel to to each other, and that a straight connecting line between a lower edge of the respective borehole on one side of the absorber body (1) and an upper edge of the borehole (4, 10, 13) on an opposite side of the absorber body (1) forms an angle with the normal on the absorber body (1) that is between 0° and 45°, preferably between 5° and 25° in the parallel projection.

7. The solar panel according to claim 6,
**characterised in**
**that** at least some of the boreholes do not run parallel, and the boreholes are preferably arranged in rows, and the central axes of the boreholes in each row lie in one plane.

8. The solar panel according to any one of claims 1 to 3,
**characterised in**
**that** the absorber body (1) in which the openings (4, 10, 13) are obtained by cutting into the absorber body locally and bending up the flap-like areas created thereby is made from a metal sheet (7) formed by roll bonding, wherein at least some of the channels (8) formed in the metal sheet (7) represent the absorber channels (17).

9. The solar panel according to claim 8,
**characterised in**
**that** some of the channels (8) formed in the metal sheet (7) are cut open and bent up locally to form the openings (4, 10, 13).

10. The solar panel according to claim 4,
**characterised in**
**that** at least in some of the slits a first side wall (11) extends at an angle of ≥ 45° or at an angle of < 45° to the perpendicular to the plane of the absorber body (1), and that a second side wall (12) extends at an angle between -10° and 0° to the perpendicular to the plane of the absorber body (1).

11. The solar panel according to claim 4,
**characterised in**
**that** when the absorber body (1) is positioned vertically, angles at which an upper side wall (12) and a lower side wall (11) extend relative to the normal to the plane of the absorber body (1) are selected such that a straight connecting line between a lower edge of the slit on one side of the absorber body (1) and an upper edge of the slit on an opposite side of the absorber body (1) forms an angle between 0° and 45°, preferably between 5° and 25° with the normal on the absorber body (1) at an intersection of the slits in question with a vertical plane perpendicular to the absorber body (1) and to a longitudinal direction of the slits,
and/or that a gap width of the slits is selected such that when the absorber body (1) is positioned vertically, a straight connecting line between a lower edge of the slit on one side of the absorber body (1) and an upper edge of the slit on an opposite side of the absorber body (1) forms an angle between 0° and 45°, preferably between 5° and 25° with the normal on the absorber body (1) at an intersection of the slits in question with a vertical plane perpendicular to the absorber body (1) and to a longitudinal direction of the slits.

12. The solar panel according to claims 5, 6 or 7,
**characterised in**
**that** a diameter of the boreholes is selected such that when the absorber body (1) is positioned vertically, a straight connecting line between a lower edge of the respective borehole on one side of the absorber body (1) and an upper edge of the borehole (4, 10, 13) on an opposite side of the absorber body (1) forms an angle with the normal on the absorber body (1) that is between 0° and 45°, preferably between 5° and 25° in a parallel projection of the boreholes parallel to the plane of the absorber body onto a vertical projection plane perpendicular to the absorber body (1).

13. The solar panel according to any one of claims 1 to 12,
**characterised in**
**that** on one side the absorber channels (17) are in thermal contact with a further absorber body (22), which has further uninterrupted openings for sunlight to pass through, wherein the further openings are arranged and conformed such that through cooperation with the openings (4, 10, 13) in the other absorber body (1) they create an angularly selective permeability to sunlight of the solar panel.

14. The solar panel according to any one of claims 1 to 13,
**characterised in**
**that** the side of the absorber body (1) facing the sun is configured or coated to absorb solar radiation, particularly in a spectrally selective manner.

15. The solar panel according to claim 14,
**characterised in**
**that** the side of the absorber body (1) facing away from the sun is configured or coated to absorb solar radiation.

16. The solar panel according to any one of claims 1 to 15,
**characterised in**
**that** the front-side and/or the rear-side transparent cover consist(s) mainly of glass or plastic, preferably of an insulating glazing.

17. The solar panel according to any one of claims 1 to 16,
**characterised in**
**that** the front-side and/or the rear-side transparent cover consist(s) of a thermally insulating material.

18. The solar panel according to any one of claims 1 to 17,
**characterised in**
**that** the front-side and the rear-side transparent covers are formed by a film.

19. The solar panel according to any one of claims 1 to 18,
**characterised in**
**that** the front-side and the rear-side transparent covers form a gas-impermeable cavity which is filled with an inert gas or which is evacuated and supported with spacer elements between the covers.

20. The solar panel according to any one of claims 1 to 18,
**characterised in**
**that** the front-side and the rear-side transparent covers form a cavity which is back-ventilated to the outside.

21. The solar panel according to claim 19,
**characterised in**
**that** an inner side of the front-side and/or the rear-side transparent cover is provided with a low-emission layer, particularly based on a non-weather resistant "soft coating", and/or that the rear-side transparent cover consists of multiple insulating glazing in which an inner side of an outermost pane of the insulating glazing is provided with a low-emission layer based on a non-weather resistant soft coating.

## Revendications

1. Collecteur solaire, qui peut être employé dans une façade ou comme parapet de balcon, comportant un corps d'absorbeur plat (1), sur ou dans lequel un ou plusieurs canaux d'absorbeur (17) pour le passage d'un fluide caloporteur sont réalisés, dans lequel le corps d'absorbeur (1) présente dans des zones, qui ne sont pas occupées par un ou plusieurs canaux d'absorbeur (17), des ouvertures traversantes (4, 10, 13) pour le passage de la lumière solaire et est disposé soit sans vitrage, soit entre un couvercle transparent du côté avant et du côté arrière, **caractérisé en ce que** les ouvertures traversantes (4, 10, 13) son obtenues en éliminant localement le matériau du corps d'absorbeur (1) ou en découpant localement le corps d'absorbeur et en pliant les zones en forme de languette ainsi produites et présentent une perméabilité à angle sélectif à la lumière solaire, dans lequel un maximum de perméabilité se situe à un angle d'incidence de ≠ 90° de la lumière solaire par rapport au plan du corps d'absorbeur (1) et sont réalisées de telle sorte que, lors d'une utilisation du collecteur solaire comme élément de façade ou parapet de balcon, une protection anti-éblouissement à mesure que le soleil monte ainsi qu'une vue simultanée dans la direction horizontale et/ou vers le bas est rendue possible.

2. Collecteur solaire selon la revendication 1,
**caractérisé en ce**
**que** les canaux d'absorbeur (17) forment plusieurs embranchements dans ou sur le corps d'absorbeur (1).

3. Collecteur solaire selon la revendication 1 ou 2,
**caractérisé en ce**
**que** le corps d'absorbeur (1) dans les zones, qui ne sont pas occupées par un ou plusieurs canaux d'absorbeur (17), est perforé en forme de matrice avec des ouvertures (4, 10, 13) rondes ou polygonales ou en forme de fente.

4. Collecteur solaire selon une des revendications 1 à 3,
**caractérisé en ce**
**que** les ouvertures (4, 10, 13), qui sont obtenues en éliminant localement le matériau du corps d'absorbeur (1), sont des fentes avec un profil de section transversale cunéiforme, sur lesquelles au moins une paroi latérale (11, 12) ne s'étend pas perpendiculairement à une surface du corps d'absorbeur (1).

5. Collecteur solaire selon une des revendications 1 à 3,
**caractérisé en ce**
**que** les ouvertures (4, 10, 13), qui sont obtenues en éliminant localement le matériau du corps d'absorbeur (1), sont des alésages avec des axes centraux, qui ne s'étendent pas perpendiculairement à une surface du corps d'absorbeur (1).

6. Collecteur solaire selon la revendication 5,
**caractérisé en ce**
**que** lors le corps d'absorbeur (1) est posé verticalement, les axes centraux des alésages s'étendent de telle sorte que, en cas d'une projection parallèle des alésages parallèlement au plan du corps d'absorbeur (1) sur un plan de projection vertical perpendiculairement au corps d'absorbeur (1), les projections des axes centraux sont parallèles les uns aux autres et en ce que dans la projection parallèle, une ligne de liaison droite entre une arête inférieure de l'alésage respectif sur un côté du corps d'absorbeur (1) et une arête supérieure de l'alésage (4, 10, 13) sur un côté opposé du corps d'absorbeur (1) a lieu en définissant un angle par rapport à la normale sur le corps d'absorbeur (1), qui est compris entre 0° et 45°, de préférence entre 5° et 25°.

7. Collecteur solaire selon la revendication 6,
**caractérisé en ce**
**qu'**au moins certains des alésages ne s'étendent pas parallèlement et de préférence les alésages sont disposés en rangées et les axes centraux des alésages de chaque rangée sont respectivement situés dans un plan.

8. Collecteur solaire selon une des revendications 1 à 3,
**caractérisé en ce**
**que** le corps d'absorbeur (1), dans lequel les ouvertures (4, 10, 13) sont obtenues en découpant localement et pliant les zones en forme de languette ainsi produites, est formé à partir d'une tôle (7) produite par laminage, dans lequel au moins une partie des canaux (8) réalisés dans la tôle (7) représentent les canaux d'absorbeur (17).

9. Collecteur solaire selon la revendication 8,
**caractérisé en ce**
**qu'**une partie des canaux (8) réalisés dans la tôle (7) sont découpés localement et pliés, afin de former les ouvertures (4, 10, 13).

10. Collecteur solaire selon la revendication 4,
**caractérisé en ce**
**qu'**au moins syr certaines des fentes une première paroi latérale (11) s'étend à un angle de ≥ 45° ou à un angle de < 45° par rapport à la verticale sur les plans du corps d'absorbeur (1), et en ce qu'une deuxième paroi latérale (12) s'étend à un angle compris entre -10° et 0° par rapport à la verticale sur les plans du corps d'absorbeur (1).

11. Collecteur solaire selon la revendication 4,
**caractérisé en ce**
**qu'**en cas de pose verticale du corps d'absorbeur (1), des angles, auxquels une paroi latérale supérieure (12) et une paroi latérale inférieure (11) s'étendant par rapport à la normale sur les plans du corps d'absorbeur (1), sont choisis de telle sorte que dans une coupe de la fente concernée avec un plan vertical perpendiculairement au corps d'absorbeur (1) et par rapport à une direction longitudinale de fente une ligne de liaison droite entre une arête inférieure de la fente sur un côté du corps d'absorbeur (1) et une arête supérieure de la fente sur un côté opposé du corps d'absorbeur (1) définisse un angle par rapport à la normale sur le corps d'absorbeur (1), qui est compris entre 0° et 45°, de préférence entre 5° et 25°,
et/ou en ce qu'une largeur de fente de la fente est choisie de telle sorte lors d'une pose verticale du corps d'absorbeur (1) dans une coupe de la fente concernée avec un plan vertical perpendiculairement au corps d'absorbeur (1) et par rapport à une direction longitudinale de fente une ligne de liaison droite entre une arête inférieure de la fente sur un côté du corps d'absorbeur (1) et une arête supérieure de la fente sur un côté opposé du corps d'absorbeur (1) définisse un angle par rapport à la normale sur le corps d'absorbeur (1), qui est compris entre 0° et 45°, de préférence entre 5° et 25°.

12. Collecteur solaire selon la revendication 5,6 ou 7,
**caractérisé en ce**
**qu'**un diamètre des alésages est choisi de telle sorte que lors d'une pose verticale du corps d'absorbeur (1) dans une projection parallèle des alésages parallèlement au plan du corps d'absorbeur sur un plan de projection vertical perpendiculairement au corps d'absorbeur (1), une ligne de liaison droite entre une arête inférieure de l'alésage respectif sur un côté du corps d'absorbeur (1) et une arête supérieure de l'alésage (4, 10, 13) sur un côté opposé du corps d'absorbeur (1) définisse un angle par rapport à la normale sur le corps d'absorbeur (1), qui est compris entre 0° et 45°, de préférence entre 5° et 25°.

13. Collecteur solaire selon une des revendications 1 à 12,
**caractérisé en ce**
**que** les canaux d'absorbeur (17) sont en contact thermique sur un côté avec un autre corps d'absorbeur (22), qui présente d'autres ouvertures pour le passage de la lumière solaire, dans lequel les autres ouvertures sont disposées et réalisées de telle sorte qu'elles atteignent par coopération avec les ouvertures (4, 10, 13) dans l'autre corps d'absorbeur (1) une perméabilité à angle sélectif à la lumière solaire du collecteur solaire.

14. Collecteur solaire selon une des revendications 1 à 13,
**caractérisé en ce**
**que** le côté tourné vers le soleil du corps d'absorbeur (1) est réalisé ou revêtu de manière à absorber le rayonnement solaire, notamment avec sélectivité spectrale.

15. Collecteur solaire selon la revendication 14,
**caractérisé en ce**
**que** le côté tourné vers le soleil du corps d'absorbeur (1) est réalisé ou revêtu de manière à absorber le rayonnement solaire.

16. Collecteur solaire selon la revendication d'une des revendications 1 à 15,
**caractérisé en ce**
**que** le couvercle transparent du côté avant et/ou arrière est constitué principalement de verre ou plastique, de préférence d'un vitrage isolant.

17. Collecteur solaire selon la revendication d'une des revendications 1 à 16,
**caractérisé en ce**
**que** le couvercle transparent du côté avant et/ou arrière est constitué principalement d'un matériau d'isolation thermique.

18. Collecteur solaire selon une des revendications 1 à 17,
**caractérisé en ce**
**que** le couvercle transparent du côté avant et/ou arrière est formé par un film.

19. Collecteur solaire selon une des revendications 1 à 18,
**caractérisé en ce**
**que** les couvercles transparents du côté avant et du côté arrière forment un espace creux étanche au gaz, qui est rempli avec un gaz rare ou qui est évacué et est appuyé avec des écarteurs entre les couvercles.

20. Collecteur solaire selon une des revendications 1 à 18,
**caractérisé en ce**
**que** les couvercles transparents du côté avant et du côté arrière forment un espace creux, qui est aéré vers l'extérieur à l'arrière.

21. Collecteur solaire selon la revendication 19,
**caractérisé en ce**
**qu'**un côté intérieur du couvercle transparent du côté avant et/ou arrière est pourvu d'une couche à faibles émissions, notamment à base d'un « soft coating » peu résistant aux intempéries et/ou en ce que le couvercle transparent du côté arrière est constitué d'un vitrage isolant multicouches, dans lequel un côté intérieur d'une vitre la plus externe du vitrage isolant est pourvu d'une couche à faibles émissions, notamment à base d'un « soft coating » peu résistant aux intempéries.
